# EUROPEAN PATENT SPECIFICATION

(11) **EP 4 571 460 B1**
(45) Date of publication and mention of the grant of the patent: **23.09.2026**
(21) Application number: 24167741.8
(22) Date of filing: 28.03.2024
(51) Int. Cl.: G06F 1/20, G06F 1/3215, G06F 1/3228, G06F 1/324, G06F 1/3296, G06N 20/20, G06N 3/0442

(54) **ENERGY CONSUMPTION CONTROL METHOD, SYSTEM AND COMPUTER PROGRAM PRODUCT**
VERFAHREN, SYSTEM UND COMPUTERPROGRAMMPRODUKT ZUR STEUERUNG DES ENERGIEVERBRAUCHS
PROCÉDÉ DE COMMANDE DE CONSOMMATION D'ÉNERGIE, SYSTÈME ET PRODUIT DE PROGRAMME INFORMATIQUE

(30) Priority: 12.12.2023 TW 112148306
(43) Date of publication of application: 18.06.2025
(73) Proprietor: Flytech Technology Co., Ltd., Taipei City 11494 (TW)
(72) Inventor: CHOU, Li-Chun, 11494 Taipei City (TW); TSAI, Shui-Chin, 11494 Taipei City (TW); LEE, Chi-Wei, 11494 Taipei City (TW)
(74) Representative: Boult Wade Tennant LLP

(56) References cited:
- WO-A1-2021/011577
- CN-B- 111 008 728
- US-A1- 2011 055 597
- COSTA BERNARDO: "A comprehensive list of machine learning algorithms - Artificial Intelligence Stack Exchange", STACK EXCHAGE, 30 November 2022 (2022-11-30), pages 1 - 5, XP093187307, Retrieved from the Internet <URL:https://ai.stackexchange.com/questions/38093/a-comprehensive-list-of-machine-learning-algorithms> [retrieved on 20240718]
- ANONYMOUS: "Ensemble learning - Wikipedia", 30 November 2023 (2023-11-30), pages 1 - 16, XP093187308, Retrieved from the Internet <URL:https://en.wikipedia.org/w/index.php?title=Ensemble_learning&oldid=1187632994> [retrieved on 20240718]

## Description

### TECHNICAL FIELD

The present invention relates to an energy consumption control method, system and computer program product, in particular to an energy consumption control method, system and computer program product which integrates both types of long-term and short-term machine learning prediction models into a single prediction model and further combines with a fuzzy feedback control mechanism.

### BACKGROUND

Currently, in order to comply with and implement ESG energy efficiency standards, most enterprises are committed to reducing their ESG carbon footprint by actively implementing various energy-saving solutions. However, in the industrial and commercial areas, which include the service industry, the healthcare industry, the manufacturing industry, the retail industry, the transportation industry, and the entertainment industry, the industrial computer equipment they use still lack intelligent automated control methods for achieving energy efficiency. Typically, the conventional industrial computer equipment requires manual operations to configure energy-saving modes or to set up idle times in order to enter the power saving mode.

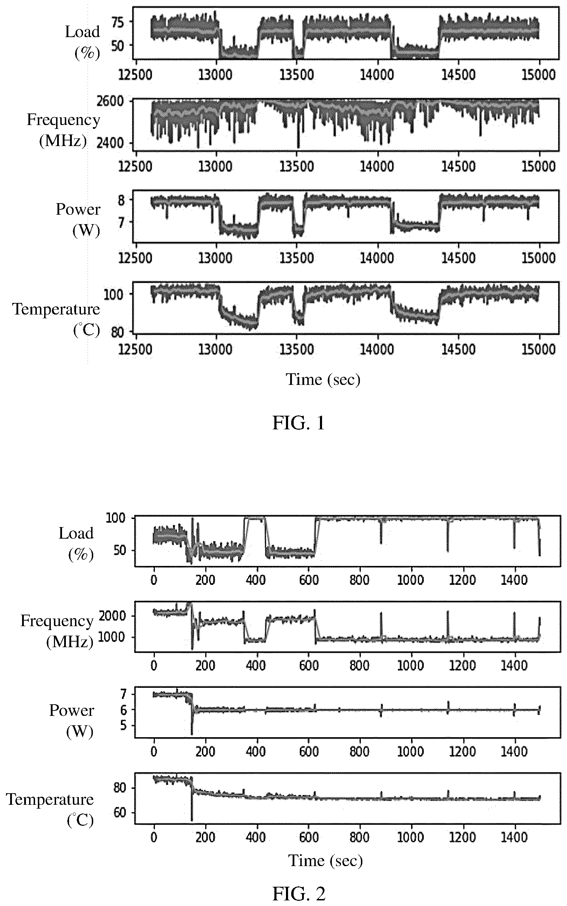

FIG. 1 is a time series schematic diagram illustrating multiple processor performance parameters for the central processing unit under normal operation within conventional industrial computer equipment. As to the industrial computer equipment, the CPU performance parameters, including the power, the frequency, the load, and the temperature, are closely related to each other. Usually, different frequencies have significantly different effects on the power performance and the temperature performance. In traditional settings, the power of the CPU is usually set between 7 and 8 watts, and the operating temperature is usually set between 80 and 100°C.

FIG. 2 is a time series schematic diagram illustrating processor performance parameters for the central processing unit under the condition of excessive power limitation within conventional industrial computer equipment. In order to reduce energy consumption, the conventional technique is used to limit the upper bound of the power of the CPU, and tends to unconditionally set the power below 6 watts. Lower power settings may significantly reduce the frequency and the temperature, which results in an accumulation of pending tasks and causes CPU overload, wherein the CPU is even in a 100% full load state for a very long period of time, and inversely causes the overall CPU performance to degrade, infulncing the user experience. In such a vicious cycle, it only leads to energy wastage.

In summary, the conventional industrial computer equipment generally adopts a simple manual method to limit CPU power, but this approach is too simple to achieve optimization and effective energy saving purpose, and lacks the evaluation for parameters, and can hardly achieve optimization and automation.

Hence, there is a need to solve the above shortcomings and deficiencies.

WO 2021/011577 A1 relates to a dynamic energy performance preference based on workloads using an adaptive algorithm.

### SUMMARY

The invention is set out in the appended set of claims.

The present invention relates to an energy consumption control method, system and computer program product, in particular to an energy consumption control method, system and computer program product which integrates both types of long-term and short-term machine learning prediction models into a single prediction model and further combines with a fuzzy feedback control mechanism.

Accordingly, the present invention provides an energy consumption control method. The method includes: continuously detecting and collecting a performance data of the processor, wherein the performance data includes a first performance parameter, a second performance parameter, and a third performance parameter; executing a dual-model machine learning model to predict the first performance parameter based on the performance data; and implementing a fuzzy feedback control mechanism to adjust the first performance parameter based on the detected second and third performance parameters.

The present invention further provides an energy consumption control computer program product, which is embodied on a non-transitory computer-readable storage medium and loaded and executed by a processor. The computer program product includes: a data collection programming module configured to continuously detect and collect a performance data of the processor, wherein the performance data includes a first performance parameter, a second performance parameter, and a third performance parameter; a dual-model machine learning model programming module configured to execute a dual-model machine learning model to predict the first performance parameter based on the performance data; and an automatic control programming module configured to implement a fuzzy feedback control mechanism to adjust the first performance parameter based on the detected second and third performance parameters.

The present invention further provides an energy consumption control system. The system includes: an electronic device including a processor which is configured to: continuously detect and collect a performance data of the processor, wherein the performance data includes a first performance parameter, a second performance parameter, and a third performance parameter; execute a dual-model machine learning model to predict the first performance parameter based on the performance data; and implement a fuzzy feedback control mechanism to adjust the first performance parameter based on the detected second and third performance parameters.

The above content described in the summary is intended to provide a simplified summary for the presently disclosed invention, so that readers are able to have an initial and basic understanding to the presently disclosed invention. The above content is not aimed to reveal or disclose a comprehensive and detailed description for the present invention, and is never intended to indicate essential elements in various embodiments in the present invention, or define the scope or coverage in the present invention.

### DESCRIPTION OF THE DRAWINGS

A more complete appreciation according to the present invention and many of the attendant advantages thereof are readily obtained as the same become better understood by reference to the following detailed description when considered in connection with the accompanying drawing, wherein:
FIG. 1 is a time series schematic diagram illustrating multiple processor performance parameters for the central processing unit under normal operation within conventional industrial computer equipment;
FIG. 2 is a time series schematic diagram illustrating processor performance parameters for the central processing unit under the condition of excessive power limitation within conventional industrial computer equipment;
FIG. 3 is a schematic diagram illustrating the system architecture for the energy consumption control system according to the present invention;
FIG. 4 is a schematic diagram illustrating the software architecture for the energy consumption control software according to the present invention;
FIG. 5 is a schematic diagram illustrating the time series of the power changes over several days for the processor inside the electronic device according to the present invention;
FIG. 6 is a schematic diagram illustrating the time series of power changes within 24 hours for the processor inside the electronic device according to the present invention;
FIG. 7 is a schematic diagram illustrating the next-day power changes of the processor as predicted by the first machine learning model according to the present invention;
FIG. 8 is a schematic diagram illustrating the next-day hourly power changes of the processor as predicted by the first machine learning model according to the present invention;
FIG. 9 is a schematic diagram illustrating the next-day first unit of time power changes of the processor as predicted by the second machine learning model included in the invention;
FIG. 10 is a schematic diagram illustrating the next-day second unit of time power changes of the processor as predicted by the second machine learning model included in the invention;
FIG. 11 is a schematic diagram illustrating the fuzzy relationship between the frequency and the load of the processor according to the present invention;
FIG. 12 is a schematic diagram illustrating the power-frequency-load relationship after the fuzzy control programming module optimizes the TDP prediction value;
FIG. 13 is a schematic diagram illustrating the temperature-frequency-load relationship after the fuzzy control programming module optimizes the TDP prediction value;
FIG. 14 is a schematic diagram illustrating the time series of actual power measurements for the processor after energy consumption control performed by the energy consumption control software according to the present invention;
FIG. 15 is a schematic diagram illustrating the time series of actual temperature measurements for the processor after energy consumption control performed by the energy consumption control software;
FIG. 16 is a block diagram illustrating the operational architecture for the energy consumption control software and the programming modules thereof according to the present invention; and
FIG. 17 is a flowchart showing the implementation steps involved in the energy consumption control method according to the present invention.

### DETAILED DESCRIPTION

The present disclosure will be described with respect to particular embodiments and with reference to certain drawings, but the disclosure is not limited thereto but is only limited by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice. It is clear that other embodiments can be configured according to the knowledge of persons skilled in the art without departing from the authentic technical teaching of the present disclosure, the claimed disclosure being limited only by the terms of the appended claims.

It is to be noticed that the term "including," used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device including means A and B" should not be limited to devices consisting only of components A and B.

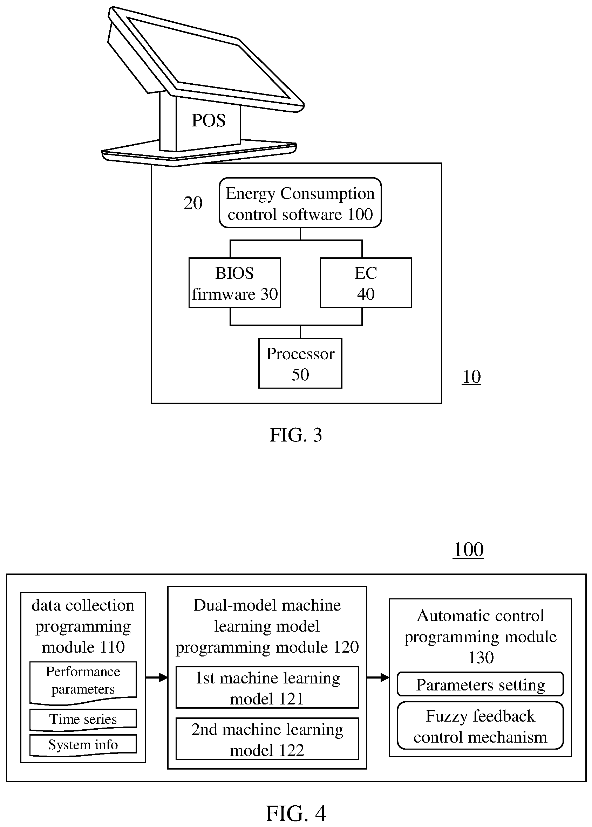

FIG. 3 is a schematic diagram illustrating the system architecture for the energy consumption control system according to the present invention. The energy consumption control method provided by the present invention is preferably in the form of an energy consumption control software 100, either an energy control computer program product, and is implemented by being installed on an energy consumption control system 10. The energy consumption control system 10 preferably includes at least one electronic device 20 and the energy consumption control software 100, which is installed on the electronic device 20 and runs autonomously under the operating system (OS). Inside the electronic device 20, there are at least a basic input output system (BIOS) firmware 30, an embedded controller (EC) 40, and a processor 50.

The electronic device 20 broadly refers to a variety of equipment and devices configured with multiple electronic components and circuits therein, including but not limited to: industrial computer equipment, consumer electronics and application-end information systems used in various industrial and commercial applications. The industrial computer equipment includes but is not limited to: a point of service (POS) machine, a point of service (POS) machine, a point of sale (POS) machine, a panel PC (PPC), a multimedia information terminal (kiosk), an embedded computer (box PC), a ticket machine, a vending machine, an automated teller machine (ATM), a network load balancing device, a workstation, an industrial computer, a medical computer, a medical workstation, and a cloud server, etc. The consumer electronic devices include, but are not limited to: a mobile device, a tablet device, a laptop, and a personal computer (PC). The operating system includes, but is not limited to: WINDOWS, Android, Linux, and iOS, etc.

FIG. 4 is a schematic diagram illustrating the software architecture for the energy consumption control software according to the present invention. The energy consumption control software 100 according to the present invention has a control privilege superior to that of the BIOS firmware 30 and the embedded controller 40. It acquires the control privilege over the processor 50 by controlling the BIOS firmware 30 and the embedded controller 40. In some embodiments, the energy consumption control software 100 is preferably configured to include a data collection programming module 110, a dual-mode machine learning model programming module 120, and an automatic control programming module 130.

The data collection programming module 110 is configured with a fixed or variable sampling rate to continuously detect and collect various performance parameters for the processor 50 during operations in the electronic device 20 under a particular user, such as, but not limited to, an administrator or a guest, over time to form time series of performance data. The performance parameters include, but are not limited to, the power, the thermal design power (TDP), the load, the frequency, and the temperature of the processor 50, wherein the power and the TDP may be considered a first performance parameter, the load a second performance parameter, the frequency a third performance parameter, and the temperature a fourth performance parameter.

In some embodiments, the load includes but is not limited to the processor load rate or the processor utilization, which refers to the ratio or percentage of the number of pending processes with respect to the number of handling processes in the processor. The frequency refers to the current clock rate of the processor. The power includes but is not limited to the GPU power, the IA (Intel Architecture) power, and the package power of the processor, wherein the GPU power refers to the power consumption of the built-in graphics processor in the processor, the IA power refers to the total power consumption of the active processor cores, and the package power refers to the current average maximum total power consumption of the processor.

In one embodiment, for example, under the Windows operating system, the data collection programming module 110 preferably reads the numerical values of various performance parameters of the processor 50 by calling the GetSystemPowerStatus function provided by the Win32 API. The sampling rate for recording the values is set to, for example, 1, 2, 3, 4, or 5 seconds, and then the values are averaged over a period of, for example, 1, 2, 3, 4, or 5 seconds, and stored as a record, to reduce the impact of outliers and pulse values, ensuring the accuracy and reliability of the sampled performance parameter values.

In some embodiments, the performance data is preferably divided into two types: the first type and the second type. The first type of performance data refers to the data used in the initial modeling phase for training and establishing the dual-model machine learning model, which is included in the dual-model machine learning model programming module 120. The second type of performance data refers to the data recorded by the data collection programming module 110 during the online execution phase and used for updating, adjusting, fine-tuning, and calibrating the dual-model machine learning model. The second type of performance data also refers to the newly collected data that is not included in the first type of performance data and has not been used to train the dual-model machine learning model.

The initial modeling phase includes at least the following steps: first, the first type of performance data is divided into a training dataset, a validation dataset, and a test dataset. Then, the dual-model machine learning model is trained with the training dataset to perform basic learning, tuned and validated with the validation dataset, and finally, the performance of the model is confirmed or fine-tuned with the test dataset.

The dual-model machine learning model programming module 120 is configured to perform short-term and long-term predictions for the power or the TDP of the processor 50. After being trained during the initial modeling phase, the dual-model machine learning model contained in the dual-model machine learning model programming module 120 can learn and analyze performance data consisting of the time series of performance parameters, focusing on aspects such as user habits, usage patterns, or usage cycles, etc., and formulate short-term and long-term performance control strategies accordingly. The dual-model machine learning model can further optimize parameters through system detection, use interrupt handling to quickly respond to instantaneous system changes, and reduce power waste during idle times, thereby addressing system energy waste and achieving optimized system performance.

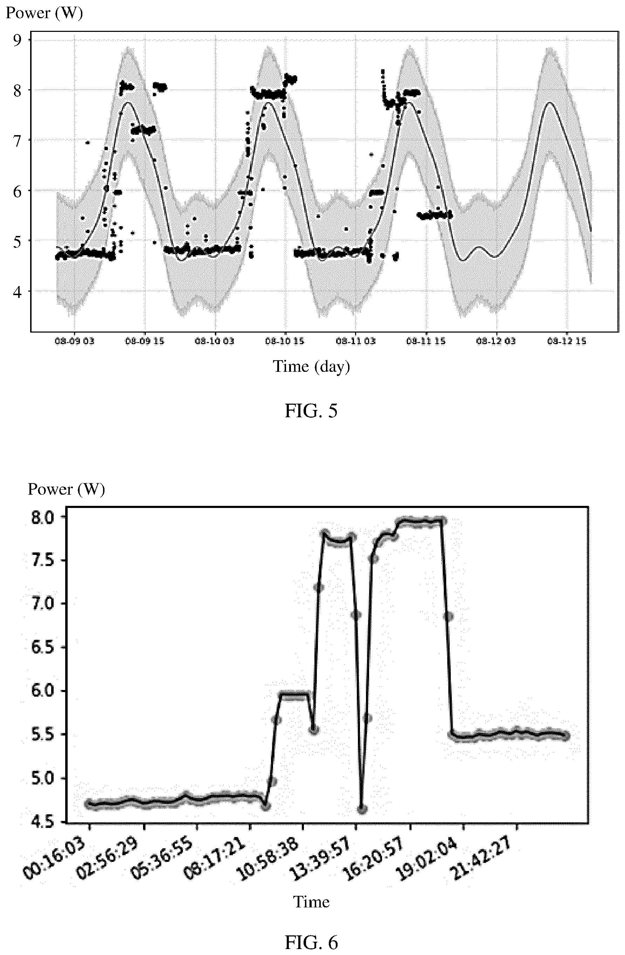

FIG. 5 is a schematic diagram illustrating the time series of the power changes over several days for the processor inside the electronic device according to the present invention. As observed from a relatively long time scale, such as weekly, monthly, quarterly, or even yearly, the time series of the performance parameters of the processor 50 actually exhibits certain regularities and logical characteristics, including segmented, cyclical, logical characteristics, and local growth trends, as shown in FIG. 5.

FIG. 6 is a schematic diagram illustrating the time series of power changes within 24 hours for the processor inside the electronic device according to the present invention. However, when observed from a relatively shorter time scale, such as every hour, every 15 minutes, every 10 minutes, or even shorter intervals such as every 5 minutes, the time series of the performance parameters may exhibit characteristics that are more irregular and less logical, full of sudden or unpredictable events, as shown in FIG. 6.

The dual-model machine learning model programming module 120 preferably integrates two separate and independent machine learning models, each used for time series prediction at different time scales, into a single machine learning model, and preferably includes a first machine learning model 121 responsible for long-term prediction tasks, and a second machine learning model 122 responsible for short-term prediction tasks. The first machine learning model 121 learns the long-term time series for various performance parameters of the processor 50, and is capable of learning information implicit in the time series of the performance parameters, such as trends, cycles, seasons, holidays, exogenous variables, and noise. After training, the primary task of the first machine learning model 121 is to predict the long-term usage of the electronic device 20, such as, predicting the processor load for the next day, in order to configure the best performance parameters for the processor 50.

The first machine learning model 121 includes, but is not limited to: an artificial neural network (ANN) model, a deep neural network (DNN) model, a convolutional neural network (CNN) model, a multilayer perceptron (MLP) model, a moving average (MA) model, an exponential smoothing (EA) model, an autoregressive (AR) model, a vector autoregressive (VAR) model, an autoregressive moving average (ARMA) model, an integrated moving average autoregressive (ARIMA) model, a regression tree model, a growth model, a latent growth curve model, a latent growth model, a Fourier model, a Fourier series model, a trend model, a prophet model, or a combination thereof.

In some embodiments, the first machine learning model 121 can be represented by formula (1) as follows: $M 1 \left(t\right) = T \left(t\right) + P \left(t\right) + H \left(t\right) + R \left(t\right) + e \left(t\right)$

In the formula (1), t represents time, M1 is the prediction value generated by the first machine learning model 121 at time, T is the trend term, P is the periodic term which includes seasonal factors, H is the holiday term, R is the regression term which includes exogenous variables, and e is the noise term. For example, the trend term T can preferably use models like the Growth model or the ARIMA model, and the periodic term P can preferably use models like the Fourier model or the ANN model.

The first machine learning model 121 can be considered as a composite time series forecasting model, formed by adding, superimposing and stacking various time series forecasting models, trend forecasting models, and periodic forecasting models. The first machine learning model 121 has a predictive ability for predicting time series better than using any single traditional time series forecasting model. In addition, because the first machine learning model 121 incorporates seasonal, holiday, and trend terms, it has good predictive ability for time series with segmented characteristics, logical characteristics, and growth trends.

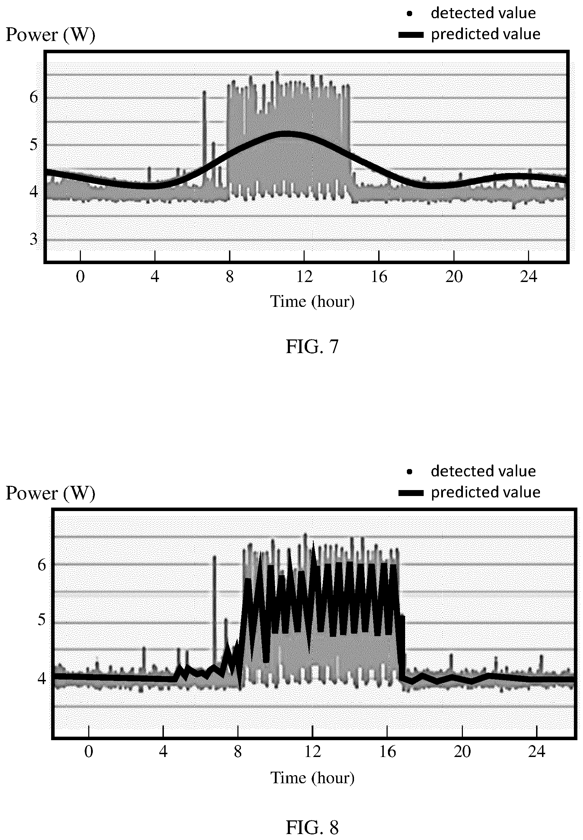

FIG. 7 is a schematic diagram illustrating the next-day power changes of the processor as predicted by the first machine learning model according to the present invention. Preferably, after training, the first machine learning model 121 according to the present invention is used to predict and evaluate the next day's usage of the processor 50 and the user's usage patterns and behaviors, which serves as a reference for setting the base TDP for the processor 50 for the next day, as shown in FIG. 7.

Furthermore, the first machine learning model 121 may also predict a peak period and an off-peak period for the next day so that the system can formulate different control strategies for those periods the next day. For example, if the first machine learning model 121 predicts that the period from early morning to noon is an off-peak period, a power saving strategy is formulated accordingly to set and adjust parameters to be the most energy efficient. Then it moves to a peak period after noon. During the peak period, parameters are then set for optimal system performance, as shown in FIG. 7.

FIG. 8 is a schematic diagram illustrating the next-day hourly power changes of the processor as predicted by the first machine learning model according to the present invention. The first machine learning model 121 may also predict the hourly power changes of the processor 50 for the next day, as shown in FIG. 8.

However, when viewed from a relatively shorter time scale, the processor 50 often encounters sudden and unknown situations. For example, a user may unexpectedly need to perform a task that requires extensive computation, which causes a sudden increase in the load on the processor 50. Because of their shorter duration period, such short-term, unexpected, or burst events, behave like short-term pulses in the longer-term time series. However, due to the resolution limitations of time series forecasting models, problems such as gradient vanishing may occur, which renders it difficult for the first machine learning model 121 to successfully predict such short-term burst events. Therefore, in order to supplement the deficiencies of the first machine learning model 121, the present invention further configures a second machine learning model 122 within the dual-model machine learning model programming module 120 for short-term prediction.

The primary task of the second machine learning model 122 is to predict the short-term usage of the electronic device 20, such as, but not limited to, predicting the system usage in the next quarter hour (or 15 minutes) to supplement the predictive shortcomings of the first machine learning model 121. The second machine learning model 122 includes, but is not limited to, an artificial neural network (ANN) model, a deep neural network (DNN) model, a convolutional neural network (CNN) model, a recurrent neural network (RNN) model, a gated recurrent unit (GRU) model, a long short-term memory (LSTM) model, a multilayer perceptron (MLP) model, or a combination thereof.

In some embodiments, the second machine learning model 122 preferably uses the long short-term memory (LSTM) model. The LSTM model is equipped with special memory cells and gate mechanisms, which can solve the gradient vanishing problem that occurs in most time series prediction models. Therefore, it is capable of capturing and predicting short-term burst or irregular events in short-term usage scenarios. When the first machine learning model 121 and the second machine learning model 122 are combined and fused to form the dual-model machine learning model programming module 120, they are capable of producing a complementary effect, which renders the dual-model machine learning model programming module 120 capable of making a comprehensive prediction for both the short-term usage and the long-term usage of the processor 50 and computing appropriate power or TDP prediction values.

After operating online, the second machine learning model 122 is primarily used to perform short-term predictions for the power of the processor 50 when a significant discrepancy occurs between the power prediction value provided by the first machine learning model 121 and the actual detected power value, thereby increasing the sensitivity of the dual-model machine learning model programming module 120 to changes in time and power and managing those unexpected power fluctuations caused by unplanned tasks.

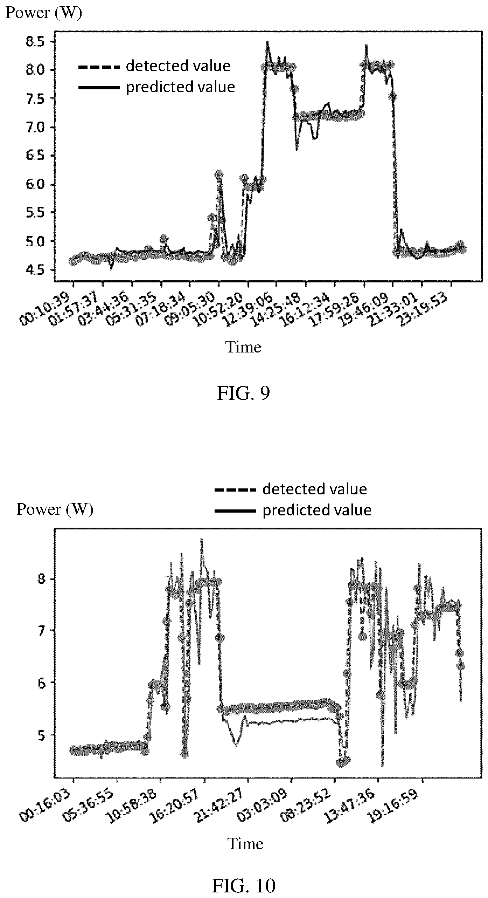

FIG. 9 is a schematic diagram illustrating the next-day first unit of time power changes of the processor as predicted by the second machine learning model included in the invention; and FIG. 10 is a schematic diagram illustrating the next-day second unit of time power changes of the processor as predicted by the second machine learning model included in the invention. After operating online, the second machine learning model 122 is configured to predict the power of the processor 50 based on longer units of time, such as every 15 minutes, as shown in FIG. 9, and also based on shorter units of time, such as every 10 minutes, to enhance the overall sensitivity of the model, as shown in FIG. 10.

The first and second machine learning models 121 and 122 are merged into a single dual-model machine learning model programming module 120, which is commanded and executed by the energy consumption control software 100. The first and second machine learning models 121 and 122 are further integrated with self-learning mechanisms based on self-feedback or reinforcement learning mechanisms. When the energy consumption control software 100 operates online, the data collection programming module 110 is configured to continuously monitor and record the second type of performance data with respect to the electronic device 20 under operation, and the first and second machine learning models 121 and 122 are regularly and periodically retrained with the most recently recorded second type of performance data to automatically perform updating, adjustment, fine tuning, and calibration.

The first and second machine learning models 121 and 122, updated with the second type of performance data, can effectively adapt to minor changes in the user's habits while using the electronic device 20, and continuously learn and dynamically self-tune. Therefore, the energy consumption control software 100 according to the present invention becomes more accurate over time, and can also calculate the optimal energy-saving configuration for the electronic device 20 for system use, and identify each user's energy configuration and store it as a user profile to establish personalized energy-saving settings for user access.

The dual-model machine learning model programming module 120 provided in the present invention, by integrating two machine learning models used for time series prediction at different time scales into a single model, is capable of learning and predicting the performance parameters of the processor 50 at both the longer time scale and the shorter time scale, thereby breaking the limitations of the predictive capabilities of traditional time series forecasting models.

After the dual-model machine learning model programming module 120 completes the prediction for the power or the TDP of the processor 50, the predicted value for the power or the TDP can be straightforwardly applied to the processor 50. However, in order to further optimize the power and the temperature for the processor 50 and to find out the optimal balanced power between the load and the frequency, the automatic control programming module 130 included in the energy consumption control software 100 is configured to further apply a fuzzy feedback control mechanism to dynamically adjust the TDP prediction value in real time.

The automatic control programming module 130 is configured to perform automatic feedback control for the power or the TDP of the processor 50 based on a fuzzy feedback control mechanism. When the automatic control programming module 130 actually controls the TDP of the processor 50, it performs the fine-tuning for the TDP prediction value predicted by the dual-model machine learning model programming module 120 to compute the best TDP value capable of balancing the load and the frequency, by using the fuzzy feedback control mechanism based on the detected values of the frequency and the load of the processor 50 collected by the data collection programming module 110 and subject to the condition of acquiring the balanced load and frequency. The adjustment ensures the energy-saving purpose while taking the frequency and the load into account without sacrificing performance and user experience, and at the same time helps to reduce the overall temperature of the processor 50. In addition, the fuzzy feedback control also improves the stability for the system control.

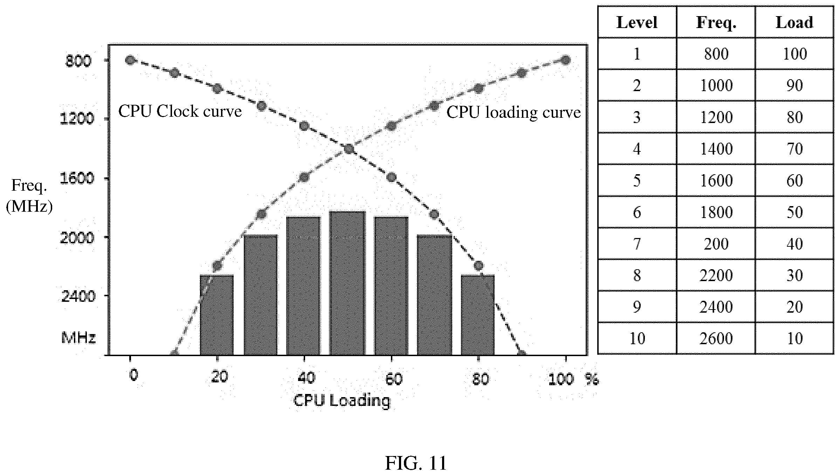

FIG. 11 is a schematic diagram illustrating the fuzzy relationship between the frequency and the load of the processor according to the present invention. In some embodiments, after measurement, it is found that the frequency of the processor 50 varies in a range from 800 to 2600 MHz and the load varies in a range from 0 to 100%. The relationship between both performance parameters is represented by the bar graph shown in FIG. 11. Preferably, when the frequency and load data of the processor are divided into, for example but not limited to, 10 equal levels and applied to, for example but not limited to, triangular or trapezoidal membership functions, it is possible to define the input-output fuzzy set graph and corresponding functions consisting of the frequency and the load. Then, by using, for example but not limited to, the centroid method, the corresponding control point coordinates on the fuzzy set graph are found subject to certain conditions of the frequency and the load.

According to empirical results, it is known that higher loads and lower frequencies result in poor operational effects, whereas lower loads and higher frequencies lead to unnecessary energy consumption. Therefore, the optimal control point should preferably be as close as possible to, for example, but not limited to, the centroid of the fuzzy set graph. In this embodiment, since the membership function is preferably symmetrical, the coordinates of the optimal control point preferably fall at the position on the fuzzy set graph where the frequency is 1800 MHz and the load is 50%. However, the coordinates of the optimal control point on the fuzzy set graph may vary depending on the type of membership function applied.

In the present invention, the fuzzy feedback control process is implemented as follows. First, the TDP value for the processor 50 is set using the TDP prediction value. Then, the changes in the frequency and load of the processor 50 are detected and recorded. Based on the detected and recorded frequency and load, the control point coordinates on the fuzzy set graph are calculated based on the determined membership function, and the TDP prediction value is readjusted according to these newly calculated coordinates until the control point coordinates move to or as close as possible to the optimal control point.

For example, in the fuzzy feedback control process according to the present invention, depending on whether the control point falls to the left or right of the optimal control point, the TDP prediction value is either increased or decreased by a fine-tuning value, until the control point coordinates move to or as close as possible to the optimal control point. The fine- tuning value is preferably in a range between ±2% of the TDP prediction value.

For example, under normal conditions, the TDP is fine-tuned by ±0.5% each time, but in a sudden burst event, the TDP is adjusted by ±2% each time in order to converge to the optimal state more quickly and to respond to emergencies more rapidly.

The control point typically drifts back and forth to the left and right of the optimal control point. Through the continuous intervention by the automatic control programming module 130 in the present invention, a more stable system control is available and achievable, and the processor 50 is capable of automatically continuing to operate in the optimal power state.

The present invention, by configuring a dual-model machine learning model within the dual-model machine learning model programming module 120, predicts usage cycles at different units of time by the dual-model machine learning model. The predictions for different time units are enabled by data analysis, which effectively enhances the overall predictive capability. The automatic control programming module 130 uses automated control parameters based on a fuzzy feedback control mechanism, eliminating the need for manual operation and greatly improving efficiency and convenience.

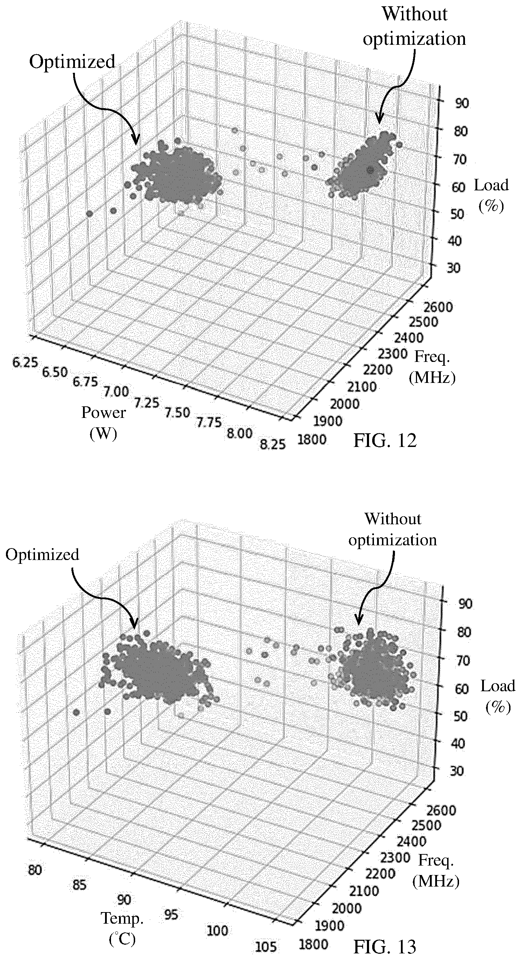

FIG. 12 is a schematic diagram illustrating the power-frequency-load relationship after the fuzzy control programming module optimizes the TDP prediction value. FIG. 13 is a schematic diagram illustrating the temperature-frequency-load relationship after the fuzzy control programming module optimizes the TDP prediction value. As shown in FIGS. 12 and 13, without the intervention of the automatic control programming module 130 in optimizing the TDP prediction value, the power of the processor 50 is approximately around 7.75 watts, and the temperature is around 100°C. After the intervention of the automatic control programming module 130 in optimizing the TDP prediction value, the overall power of the processor 50 drops to about 6.5 watts, and the temperature decreases to around 80°C, thereby effectively controlling both the power and the temperature of the processor 50 within a desirable range.

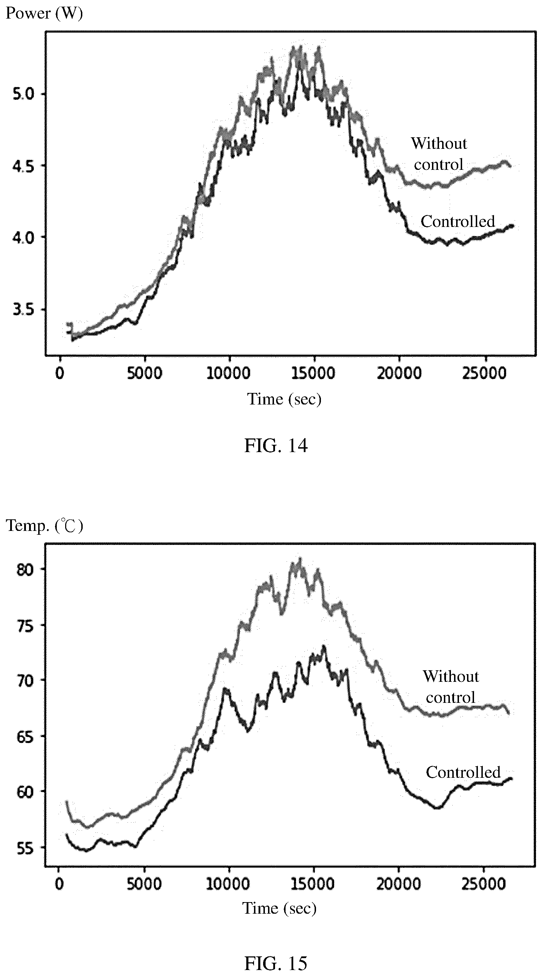

FIG. 14 is a schematic diagram illustrating the time series of actual power measurements for the processor after energy consumption control performed by the energy consumption control software according to the present invention. FIG. 15 is a schematic diagram illustrating the time series of actual temperature measurements for the processor after energy consumption control performed by the energy consumption control software. When the energy consumption control software 100 according to the present invention intervenes in the power or the TDP control for the processor 50 in the electronic device 20, it is observed from FIGS. 14 and 15 that after a period of use of the electronic device 20, the power consumption increases with rising temperature, which results in a poorer system performance if without the intervention of the energy consumption control software 100. However, after the intervention of the energy consumption control software 100, the processor 50 begins to acquire optimized control, which not only reduces the temperature but also improves the power consumption, thereby saving a significant amount of electricity over time.

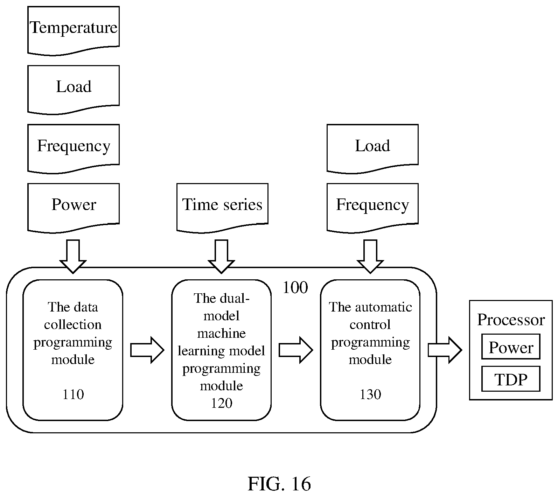

FIG. 16 is a block diagram illustrating the operational architecture for the energy consumption control software and the programming modules thereof according to the present invention. In summary, after the energy consumption control software 100 is operated online, the data collection programming module 110 is configured to actively detect and record various performance parameters of the processor 50 and transmit them to the dual-model machine learning model programming module 120, which is trained based on the time series of the performance parameters. The dual-model machine learning model programming module 120 is configured to actively predict the power or the TDP of the processor 50 and generate the power or the TDP prediction values for the processor 50. Then, the automatic control programming module 130 is configured to implement the fuzzy feedback control based on the power prediction values, to find the optimal power or TDP that balances the load and the frequency based on the feedback from the frequency and the load. The optimal power or TDP is then used to actually control and fine-tune the power of the processor 50 or limit its TDP. Thus, the present invention provides fully or semi-automatic energy consumption control for the electronic device 20, thereby reducing the overall energy consumption for the electronic device.

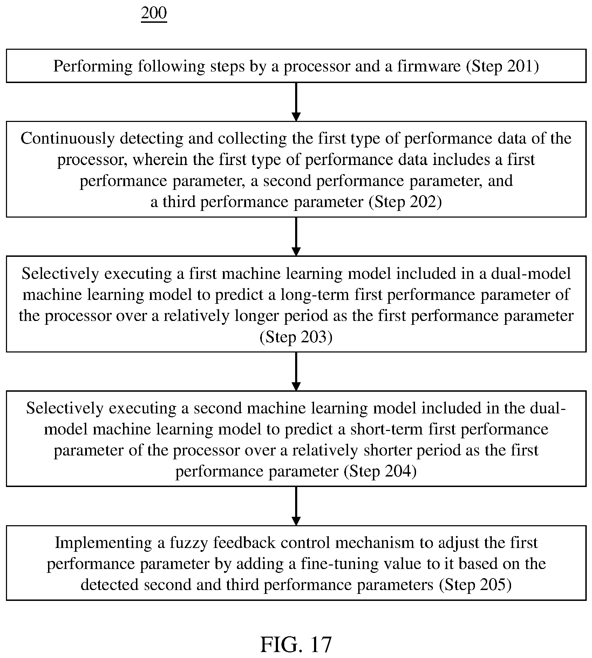

FIG. 17 is a flowchart showing the implementation steps involved in the energy consumption control method according to the present invention. The energy consumption control method 200 preferably includes, but is not limited to, the following steps: performing following steps by a processor and a firmware (Step 201); continuously detecting and collecting the first type of performance data of the processor, wherein the first type of performance data includes a first performance parameter, a second performance parameter, and a third performance parameter (Step 202); selectively executing a first machine learning model included in a dual-model machine learning model to predict a long-term first performance parameter of the processor over a relatively longer period as the first performance parameter (Step 203); selectively executing a second machine learning model included in the dual-model machine learning model to predict a short-term first performance parameter of the processor over a relatively shorter period as the first performance parameter (Step 204); and implementing a fuzzy feedback control mechanism to adjust the first performance parameter by adding a fine-tuning value to it based on the detected second and third performance parameters (Step 205).

While the disclosure has been described in terms of what are presently considered to be the most practical and preferred embodiments, it is to be understood that the disclosure need not be limited to the disclosed embodiments. On the contrary, it is intended to cover various modifications and similar arrangements included within the scope of the appended claims, which are to be accorded with the broadest interpretation so as to encompass all such modifications and similar structures. Therefore, the above description and illustration should not be taken as limiting the scope of the present disclosure which is defined by the appended claims.

## Claims

1. An energy consumption control method (200), comprising:
performing (201) following steps by a processor (50):
continuously (202) detecting and collecting a performance data of the processor (50), wherein the performance data comprises a thermal design power, a load, and a frequency;
executing (203, 204) a dual-model machine learning model comprising a first sub-machine learning model and a second sub-machine learning model to predict the thermal design power based on the performance data; and
implementing (205) a fuzzy feedback control mechanism to adjust the thermal design power based on the detected load and frequency,
wherein the first sub-machine learning model is configured to predict the thermal design power for next day over a relatively long-term time series incorporating trend, seasonality, segmented patterns, logical changepoints, logical user behaviors, and growth characteristics, and the second sub-machine learning model is configured to predict the thermal design power for a current day over a relatively short-term time series incorporating burst, unexpected, and irregular events.

2. The energy consumption control method (200) according to claim 1, further comprising:
selectively executing (203) the first sub-machine learning model comprised in the dual-model machine learning model to predict a first period thermal design power in a first period;
selectively executing (204) the second sub-machine learning model comprised in the dual- model machine learning model to predict a second period thermal design power in a second period; and
selectively correcting the first period thermal design power based on the second period thermal design power to use as the thermal design power.

3. The energy consumption control method (200) according to claim 1, further comprising:
selectively executing the dual-model machine learning model to predict a first period thermal design power in a first period and a second period thermal design power in a second period and to correct the first period thermal design power based on the second period thermal design power to use as the thermal design power, wherein the first period and the second period have different durations; and
implementing (205) the fuzzy feedback control mechanism to add a fine-tuning value to the thermal design power based on the detected load and frequency to adjust the thermal design power.

4. The energy consumption control method (200) according to claim 2, wherein the first sub-machine learning model comprises one of a neural network model, a deep neural network model, a convolutional neural network model, a multilayer perceptron model, a moving average model, an exponential smoothing model, an autoregressive model, a vector autoregressive model, an autoregressive moving average model, an integrated moving average autoregressive model, a regression tree model, a growth model, a latent growth curve model, a latent growth model, a Fourier model, a Fourier series model, a trend model, a prophet model, and a combination thereof.

5. The energy consumption control method (200) according to claim 2, wherein the second sub-machine learning model comprises one of a neural network model, a deep neural network model, a convolutional neural network model, a recurrent neural network model, a gated recurrent unit model, a long short-term memory model, a multilayer perceptron model, and a combination thereof.

6. The energy consumption control method (200) according to claim 3, wherein the fine-tuning value has a numerical value in a range between ±2% of a value of the thermal design power.

7. An energy consumption control computer program product (100), which is embodied on a non-transitory computer-readable storage medium and loaded and executed by a processor (50), comprising:
a data collection programming module (110) configured to continuously detect and collect a performance data of the processor (50), wherein the performance data comprises a thermal design power, a load, and a frequency;
a dual-model machine learning model programming module (120) configured to execute a dual-model machine learning model comprising a first sub-machine learning model and a second sub-machine learning model to predict the thermal design power based on the performance data; and
an automatic control programming module (130) configured to implement a fuzzy feedback control mechanism to adjust the thermal design power based on the detected load and frequency,
wherein the first sub-machine learning model is configured to predict the thermal design power for next day over a relatively long-term time series incorporating trend, seasonality, segmented patterns, logical changepoints, logical user behaviors, and growth characteristics, and the second sub-machine learning model is configured to predict the thermal design power for a current day over a relatively short-term time series incorporating burst, unexpected, and irregular events.

8. The energy consumption control computer program product (100) according to claim 7, wherein the dual-model machine learning model programming module (120) further comprises:
the first sub-machine learning model (121) configured to predict a first period thermal design power in a first period; and
the second sub-machine learning model (122) configured to predict a second period thermal design power in a second period and to correct the first period thermal design power based on the second period thermal design power to use as the thermal design power, wherein the first period and the second period have different durations.

9. The energy consumption control computer program product (100) according to claim 8, wherein the dual-model machine learning model (120) is configured to integrate the first and second sub-machine learning models into a single machine learning model.

10. The energy consumption control computer program product (100) according to claim 7, wherein the dual-model machine learning model programming module (120) is further configured to:
execute the dual-model machine learning model to predict a first period thermal design power in a first period and a second period thermal design power in a second period and correct the first period thermal design power based on the second period thermal design power to use as the thermal design power, wherein the first period and the second period have different durations.

11. An energy consumption control system (10), comprising:
an electronic device (20) comprising a processor (50) which is configured to:
continuously detect (202) and collect a performance data of the processor (50),
wherein the performance data comprises a thermal design power, a load, and a frequency;
execute (203, 204) a dual-model machine learning model comprising a first sub-machine learning model and a second sub-machine learning model to predict the thermal design power based on the performance data; and
implement (205) a fuzzy feedback control mechanism to adjust the thermal design power based on the detected load and frequency,
wherein the first sub-machine learning model is configured to predict the thermal design power for next day over a relatively long-term time series incorporating trend, seasonality, segmented patterns, logical changepoints, logical user behaviors, and growth characteristics, and the second sub-machine learning model is configured to predict the thermal design power for a current day over a relatively short-term time series incorporating burst, unexpected, and irregular events.

12. The energy consumption control system (10) according to claim 11, wherein the processor (50) is further configured to:
selectively execute (203) the first sub-machine learning model comprised in the dual-model machine learning model to predict a first period thermal design power in a first period;
selectively execute (204) the second sub-machine learning model comprised in the dual-model machine learning model to predict a second period thermal design power in a second period; and
selectively correct the first period thermal design power based on the second period thermal design power to use as the thermal design power, wherein the first period and the second period have different durations.

13. The energy consumption control system (10) according to claim 11, wherein the processor (50) is further configured to:
selectively execute the dual-model machine learning model to predict a first period thermal design power in a first period and a second period thermal design power in a second period and to correct the first period thermal design power based on the second period thermal design power to use as the thermal design power, wherein the first period and the second period have different durations; and
implement (205) the fuzzy feedback control mechanism to add a fine-tuning value to the thermal design power based on the detected load and frequency to adjust the thermal design power.

## Patentansprüche

1. Energieverbrauchssteuerungsverfahren (200), umfassend:
Durchführen (201) folgender Schritte durch einen Prozessor (50):
kontinuierliches (202) Erfassen und Sammeln von Leistungsdaten des Prozessors (50), wobei die Leistungsdaten eine thermische Verlustleistung, eine Last und eine Frequenz umfassen;
Ausführen (203,204) eines maschinellen Dual-Modell-Lernmodells, das ein erstes maschinelles Teillernmodell und ein zweites maschinelles Teillernmodell umfasst, um die thermische Verlustleistung basierend auf den Leistungsdaten vorherzusagen; und
Implementieren (205) eines Fuzzy-Feedback-Steuerungsmechanismus, um die thermische Verlustleistung basierend auf der erfassten Last und Frequenz anzupassen,
wobei das erste maschinelle Teillernmodell so konfiguriert ist, dass es die thermische Verlustleistung für den nächsten Tag über eine relativ lange Zeitfolge unter Einbeziehung von Trends, Saisonalität, segmentierten Mustern, logischen Wendepunkten, logischen Benutzerverhalten und Wachstumscharakteristika vorhersagt, und das zweite maschinelle Teillernmodell so konfiguriert ist, dass es die thermische Verlustleistung für einen aktuellen Tag über eine relativ kurze Zeitfolge unter Einbeziehung von unvermuteten, unerwarteten und unregelmäßigen Ereignissen vorhersagt.

2. Energieverbrauchssteuerungsverfahren (200) nach Anspruch 1, ferner umfassend:
selektives Ausführen (203) des ersten maschinellen Teillernmodells, das im Dual-Modell-Maschinenlernmodell umfasst ist, um eine thermische Verlustleistung einer ersten Periode in einer ersten Periode vorherzusagen;
selektives Ausführen (204) des zweiten maschinellen Teillernmodells, das im Dual-Modell-Maschinenlernmodell umfasst ist, um eine thermische Verlustleistung einer zweiten Periode in einer zweiten Periode vorherzusagen; und
selektives Korrigieren der ersten thermischen Verlustleistung, basierend auf der thermischen Verlustleistung der zweiten Periode, um diese als die thermische Verlustleistung zu verwenden.

3. Energieverbrauchssteuerungsverfahren (200) nach Anspruch 1, ferner umfassend:
selektives Ausführen des Dual-Modell-Maschinenlernmodells, um eine thermische Verlustleistung der ersten Periode in einer ersten Periode und eine thermische Verlustleistung der zweiten Periode in einer zweiten Periode vorherzusagen und die thermische Verlustleistung der ersten Periode basierend auf der thermischen Auslegungsleistung der zweiten Periode zu korrigieren, um diese als die thermische Verlustleistung zu verwenden, wobei die erste Periode und die zweite Periode unterschiedliche Dauern aufweisen; und
Implementieren (205) des Fuzzy-Feedback-Steuerungsmechanismus, um zu der thermischen Verlustleistung basierend auf der erfassten Last und Frequenz einen Feinabstimmungswert hinzuzufügen, um die thermische Verlustleistung anzupassen.

4. Energieverbrauchssteuerungsverfahren (200) nach Anspruch 2, wobei das erste maschinelle Teillernmodell eines von einem neuronalen Netzwerkmodell, einem tiefen neuronalen Netzwerkmodell, einem neuronalen Faltungsnetzwerkmodell, einem Multilayer-Perceptron-Modell, einem gleitenden Mittelwertmodell, einem exponentiellen Glättungsmodell, einem autoregressiven Modell, einem vektoriellen autoregressiven Modell, einem autoregressiven gleitenden Mittelwertmodell, einem integrierten autoregressiven gleitenden Mittelwertmodell, einem Regressionsbaummodell, einem Wachstumsmodell, einem latenten Wachstumskurvenmodell, einem latenten Wachstumsmodell, einem Fourier-Modell, einem Fourier-Reihenmodell, einem Trendmodell, einem Prophet-Modell oder einer Kombination davon umfasst.

5. Energieverbrauchssteuerungsverfahren (200) nach Anspruch 2, wobei das zweite maschinelle Teillernmodell eines von einem neuronalen Netzwerkmodell, einem tiefen neuronalen Netzwerkmodell, einem Faltungsnetzwerkmodell, einem rekurrenten neuronalen Netzwerkmodell, einem Gated Recurrent Unit-Modell, einem Long Short-Term Memory-Modell, einem Multilayer-Perceptron-Modell oder einer Kombination davon umfasst.

6. Energieverbrauchssteuerungsverfahren (200) nach Anspruch 3, wobei der Feinabstimmungswert einen numerischen Wert in einem Bereich zwischen ±2% eines Werts der thermischen Verlustleistung aufweist.

7. Energieverbrauchssteuerungscomputerprogrammprodukt (100), das auf einem nichtflüchtigen computerlesbaren Speichermedium liegt und geladen und von einem Prozessor (50) ausgeführt wird, umfassend:
ein Datensammlungsprogrammiermodul (110), das dazu konfiguriert ist, kontinuierlich Leistungsdaten des Prozessors (50) zu erfassen und sammeln, wobei die Leistungsdaten eine thermische Verlustleistung, eine Last und eine Frequenz umfassen;
ein maschinelles Dual-Modell-Lernmodellprogrammiermodul (120), das dazu konfiguriert ist, ein maschinelles Dual-Modell-Lernmodell auszuführen, das ein erstes maschinelles Teillernmodell und ein zweites maschinelles Teillernmodell umfasst, um die thermische Verlustleistung basierend auf den Leistungsdaten vorherzusagen; und
ein automatisches Steuerungsprogrammiermodul (130), das dazu konfiguriert ist, einen Fuzzy-Feedback-Steuerungsmechanismus zu implementieren, um die thermische Verlustleistung basierend auf der erfassten Last und Frequenz anzupassen,
wobei das erste maschinelle Teillernmodell so konfiguriert ist, dass es die thermische Verlustleistung für den nächsten Tag über eine relativ lange Zeitfolge unter Einbeziehung von Trends, Saisonalität, segmentierten Mustern, logischen Wendepunkten, logischen Benutzerverhalten und Wachstumscharakteristika vorhersagt, und das zweite maschinelle Teillernmodell so konfiguriert ist, dass es die thermische Verlustleistung für einen aktuellen Tag über eine relativ kurze Zeitfolge unter Einbeziehung von unvermuteten, unerwarteten und unregelmäßigen Ereignissen vorhersagt.

8. Energieverbrauchssteuerungscomputerprogrammprodukt (100) nach Anspruch 7, wobei das maschinelle Dual-Modell-Lernmodellprogrammiermodul (120) weiter Folgendes umfasst:
das erste maschinelle Teillernmodell (121), das dazu konfiguriert ist, eine thermische Verlustleistung der ersten Periode in einer ersten Periode vorherzusagen; und
das zweite maschinelle Teillernmodell (122), das dazu konfiguriert ist, eine thermische Verlustleistung der zweiten Periode in einer zweiten Periode vorherzusagen und die thermische Verlustleistung der ersten Periode basierend auf der thermischen Auslegungsleistung der zweiten Periode zu korrigieren, um diese als die thermische Verlustleistung zu verwenden, wobei die erste Periode und die zweite Periode unterschiedliche Dauern aufweisen.

9. Energieverbrauchssteuerungscomputerprogrammprodukt (100) nach Anspruch 8, wobei das Dual-Modell-Maschinenlernmodell (120) dazu konfiguriert ist, das erste und das zweite maschinelle Teillernmodell in ein einziges maschinelles Lernmodell zu integrieren.

10. Energieverbrauchssteuerungscomputerprogrammprodukt (100) nach Anspruch 7, wobei das maschinelle Dual-Modell-Lernmodellprogrammiermodul (120) ferner für Folgendes konfiguriert ist:
Ausführen des Dual-Modell-Maschinenlernmodells, um eine thermische Verlustleistung der ersten Periode in einer ersten Periode und eine thermische Verlustleistung der zweiten Periode in einer zweiten Periode vorherzusagen und die thermische Verlustleistung der ersten Periode basierend auf der thermischen Auslegungsleistung der zweiten Periode zu korrigieren, um diese als die thermische Verlustleistung zu verwenden, wobei die erste Periode und die zweite Periode unterschiedliche Dauern aufweisen.

11. Energieverbrauchssteuerungssystem (10), umfassend:
eine elektronische Vorrichtung (20), die einen Prozessor (50) umfasst, der für Folgendes konfiguriert ist:
kontinuierliches Erfassen (202) und Sammeln von Leistungsdaten des Prozessors (50), wobei die Leistungsdaten eine thermische Verlustleistung, eine Last und eine Frequenz umfassen;
Ausführen (203,204) eines maschinellen Dual-Modell-Lernmodells, das ein erstes maschinelles Teillernmodell und ein zweites maschinelles Teillernmodell umfasst, um die thermische Verlustleistung basierend auf den Leistungsdaten vorherzusagen; und
Implementieren (205) eines Fuzzy-Feedback-Steuerungsmechanismus, um die thermische Verlustleistung basierend auf der erfassten Last und Frequenz anzupassen,
wobei das erste maschinelle Teillernmodell so konfiguriert ist, dass es die thermische Verlustleistung für den nächsten Tag über eine relativ lange Zeitfolge unter Einbeziehung von Trends, Saisonalität, segmentierten Mustern, logischen Wendepunkten, logischen Benutzerverhalten und Wachstumscharakteristika vorhersagt, und das zweite maschinelle Teillernmodell so konfiguriert ist, dass es die thermische Verlustleistung für einen aktuellen Tag über eine relativ kurze Zeitfolge unter Einbeziehung von unvermuteten, unerwarteten und unregelmäßigen Ereignissen vorhersagt.

12. Energieverbrauchssteuerungssystem (10) nach Anspruch 11, wobei der Prozessor (50) ferner für Folgendes konfiguriert ist:
selektives Ausführen (203) des ersten maschinellen Teillernmodells, das im Dual-Modell-Maschinenlernmodell umfasst ist, um eine thermische Verlustleistung einer ersten Periode in einer ersten Periode vorherzusagen;
selektives Ausführen (204) des zweiten maschinellen Teillernmodells, das im Dual-Modell-Maschinenlernmodell umfasst ist, um eine thermische Verlustleistung einer zweiten Periode in einer zweiten Periode vorherzusagen; und
selektives Korrigieren der ersten thermischen Verlustleistung, basierend auf der thermischen Verlustleistung der zweiten Periode, um diese als die thermische Verlustleistung zu verwenden, wobei die erste Periode und die zweite Periode unterschiedliche Dauern aufweisen.

13. Energieverbrauchssteuerungssystem (10) nach Anspruch 11, wobei der Prozessor (50) ferner für Folgendes konfiguriert ist:
selektives Ausführen des Dual-Modell-Maschinenlernmodells, um eine thermische Verlustleistung der ersten Periode in einer ersten Periode und eine thermische Verlustleistung der zweiten Periode in einer zweiten Periode vorherzusagen und die thermische Verlustleistung der ersten Periode basierend auf der thermischen Auslegungsleistung der zweiten Periode zu korrigieren, um diese als die thermische Verlustleistung zu verwenden, wobei die erste Periode und die zweite Periode unterschiedliche Dauern aufweisen; und
Implementieren (205) des Fuzzy-Feedback-Steuerungsmechanismus, um zu der thermischen Verlustleistung basierend auf der erfassten Last und Frequenz einen Feinabstimmungswert hinzuzufügen, um die thermische Verlustleistung anzupassen.

## Revendications

1. Procédé de commande de consommation d'énergie (200), comprenant :
l'exécution (201) des étapes suivantes par un processeur (50) :
la détection et la collecte en continu (202) de données de performance du processeur (50), dans lequel les données de performance comprennent une enveloppe thermique, une charge et une fréquence ;
l'exécution (203, 204) d'un modèle d'apprentissage automatique à double modèle comprenant un premier sous-modèle d'apprentissage automatique et un second sous-modèle d'apprentissage automatique pour prédire l'enveloppe thermique sur la base des données de performance ; et
la mise en œuvre (205) d'un mécanisme de commande par rétroaction floue pour ajuster l'enveloppe thermique sur la base de la charge et de la fréquence détectées,
dans lequel le premier sous-modèle d'apprentissage automatique est configuré pour prédire l'enveloppe thermique du lendemain sur une série chronologique relativement longue intégrant la tendance, la saisonnalité, les modèles segmentés, les points de changement logiques, les comportements logiques des utilisateurs et les caractéristiques de croissance, et le second sous-modèle d'apprentissage automatique est configuré pour prédire l'enveloppe thermique du jour actuel sur une série chronologique relativement courte intégrant les événements soudains, imprévus et irréguliers.

2. Procédé de commande de consommation d'énergie (200) selon la revendication 1, comprenant en outre :
l'exécution sélective (203) du premier sous-modèle d'apprentissage automatique compris dans le modèle d'apprentissage automatique à double modèle pour prédire une enveloppe thermique de première période au cours d'une première période ;
l'exécution sélective (204) du second sous-modèle d'apprentissage automatique compris dans le modèle d'apprentissage automatique à double modèle pour prédire une enveloppe thermique de seconde période au cours d'une seconde période ; et
la correction sélective de l'enveloppe thermique de première période sur la base de l'enveloppe thermique de seconde période à utiliser comme enveloppe thermique.

3. Procédé de commande de consommation d'énergie (200) selon la revendication 1, comprenant en outre :
l'exécution sélective du modèle d'apprentissage automatique à double modèle pour prédire une enveloppe thermique de première période au cours d'une première période et une enveloppe thermique de seconde période au cours d'une seconde période et pour corriger l'enveloppe thermique de première période sur la base de l'enveloppe thermique de seconde période à utiliser comme enveloppe thermique, dans lequel la première période et la seconde période présentent des durées différentes ; et
la mise en œuvre (205) du mécanisme de commande par rétroaction floue pour ajouter une valeur de réglage fin à l'enveloppe thermique sur la base de la charge et de la fréquence détectées afin d'ajuster l'enveloppe thermique.

4. Procédé de contrôle de consommation d'énergie (200) selon la revendication 2, dans lequel le premier sous-modèle d'apprentissage automatique comprend l'un parmi un modèle de réseau neuronal, un modèle de réseau neuronal profond, un modèle de réseau neuronal convolutif, un modèle de perceptron multicouche, un modèle de moyenne mobile, un modèle de lissage exponentiel, un modèle autorégressif, un modèle autorégressif vectoriel, un modèle autorégressif à moyenne mobile, un modèle autorégressif intégré à moyenne mobile, un modèle d'arbre de régression, un modèle de croissance, un modèle de courbe de croissance latente, un modèle de croissance latente, un modèle de Fourier, un modèle de série de Fourier, un modèle de tendance, un modèle Prophet, et une combinaison de ceux-ci.

5. Procédé de commande de consommation d'énergie (200) selon la revendication 2, dans lequel le second sous-modèle d'apprentissage automatique comprend l'un parmi un modèle de réseau neuronal, un modèle de réseau neuronal profond, un modèle de réseau neuronal convolutif, un modèle de réseau neuronal récurrent, un modèle d'unité récurrente à porte, un modèle de mémoire à long terme et à court terme, un modèle de perceptron multicouche, et une combinaison de ceux-ci.

6. Procédé de commande de consommation d'énergie (200) selon la revendication 3, dans lequel la valeur de réglage fin présente une valeur numérique dans une plage comprise entre ±2 % d'une valeur de l'enveloppe thermique.

7. Produit de programme informatique de commande de consommation d'énergie (100), qui est incorporé sur un support de stockage non transitoire lisible par ordinateur et chargé et exécuté par un processeur (50), comprenant :
un module de programmation de collecte de données (110) configuré pour détecter et collecter en continu des données de performance du processeur (50), dans lequel les données de performance comprennent une enveloppe thermique, une charge et une fréquence ;
un module de programmation de modèle d'apprentissage automatique à double modèle (120) configuré pour exécuter un modèle d'apprentissage automatique à double modèle comprenant un premier sous-modèle d'apprentissage automatique et un second sous-modèle d'apprentissage automatique pour prédire l'enveloppe thermique sur la base des données de performance ; et
un module de programmation de commande automatique (130) configuré pour mettre en œuvre un mécanisme de commande par rétroaction floue afin d'ajuster l'enveloppe thermique sur la base de la charge et de la fréquence détectées,
dans lequel le premier sous-modèle d'apprentissage automatique est configuré pour prédire l'enveloppe thermique du lendemain sur une série chronologique relativement longue intégrant la tendance, la saisonnalité, les modèles segmentés, les points de changement logiques, les comportements logiques des utilisateurs et les caractéristiques de croissance, et le second sous-modèle d'apprentissage automatique est configuré pour prédire l'enveloppe thermique du jour actuel sur une série chronologique relativement courte intégrant les événements soudains, imprévus et irréguliers.

8. Produit de programme informatique de commande de consommation d'énergie (100) selon la revendication 7, dans lequel le module de programmation de modèle d'apprentissage automatique à double modèle (120) comprend en outre :
le premier sous-modèle d'apprentissage automatique (121) configuré pour prédire une enveloppe thermique de première période au cours d'une première période ; et
le second sous-modèle d'apprentissage automatique (122) configuré pour prédire une enveloppe thermique de seconde période au cours d'une seconde période et pour corriger l'enveloppe thermique de première période sur la base de l'enveloppe thermique de seconde période à utiliser comme enveloppe thermique, dans lequel la première période et la seconde période présentent des durées différentes.

9. Produit de programme informatique de commande de consommation d'énergie (100) selon la revendication 8, dans lequel le modèle d'apprentissage automatique à double modèle (120) est configuré pour intégrer les premier et second sous-modèles d'apprentissage automatique dans un seul modèle d'apprentissage automatique.

10. Produit de programme informatique de commande de consommation d'énergie (100) selon la revendication 7, dans lequel le module de programmation de modèle d'apprentissage automatique à double modèle (120) est en outre configuré pour :
exécuter le modèle d'apprentissage automatique à double modèle pour prédire une enveloppe thermique de première période au cours d'une première période et une enveloppe thermique de seconde période au cours d'une seconde période et corriger l'enveloppe thermique de première période sur la base de l'enveloppe thermique de seconde période à utiliser comme enveloppe thermique, dans lequel la première période et la seconde période présentent des durées différentes.

11. Système de commande de consommation d'énergie (10), comprenant :
un dispositif électronique (20) comprenant un processeur (50) qui est configuré pour :
détecter (202) et collecter en continu des données de performance du processeur (50), dans lequel les données de performance comprennent une enveloppe thermique, une charge et une fréquence ;
exécuter (203, 204) un modèle d'apprentissage automatique à double modèle comprenant un premier sous-modèle d'apprentissage automatique et un second sous-modèle d'apprentissage automatique pour prédire l'enveloppe thermique sur la base des données de performance ; et
mettre en œuvre (205) un mécanisme de commande par rétroaction floue pour ajuster l'enveloppe thermique sur la base de la charge et de la fréquence détectées,
dans lequel le premier sous-modèle d'apprentissage automatique est configuré pour prédire l'enveloppe thermique du lendemain sur une série chronologique relativement longue intégrant la tendance, la saisonnalité, les modèles segmentés, les points de changement logiques, les comportements logiques des utilisateurs et les caractéristiques de croissance, et le second sous-modèle d'apprentissage automatique est configuré pour prédire l'enveloppe thermique du jour actuel sur une série chronologique relativement courte intégrant les événements soudains, imprévus et irréguliers.

12. Système de commande de consommation d'énergie (10) selon la revendication 11, dans lequel le processeur (50) est en outre configuré pour :
exécuter (203) sélectivement le premier sous-modèle d'apprentissage automatique compris dans le modèle d'apprentissage automatique à double modèle pour prédire une enveloppe thermique de première période au cours d'une première période ;
exécuter (204) sélectivement le second sous-modèle d'apprentissage automatique compris dans le modèle d'apprentissage automatique à double modèle pour prédire une enveloppe thermique de seconde période au cours d'une seconde période ; et
corriger sélectivement l'enveloppe thermique de première période sur la base de l'enveloppe thermique de seconde période à utiliser comme enveloppe thermique, dans lequel la première période et la seconde période présentent des durées différentes.

13. Système de commande de consommation d'énergie (10) selon la revendication 11, dans lequel le processeur (50) est en outre configuré pour :
exécuter sélectivement le modèle d'apprentissage automatique à double modèle pour prédire une enveloppe thermique de première période au cours d'une première période et une enveloppe thermique de seconde période au cours d'une seconde période et pour corriger l'enveloppe thermique de première période sur la base de l'enveloppe thermique de seconde période à utiliser comme enveloppe thermique, dans lequel la première période et la seconde période présentent des durées différentes ; et
mettre en œuvre (205) le mécanisme de commande par rétroaction floue pour ajouter une valeur de réglage fin à l'enveloppe thermique sur la base de la charge et de la fréquence détectées afin d'ajuster l'enveloppe thermique.
